# EUROPÄISCHE PATENTSCHRIFT

(11) **EP 4 638 215 B1**
(45) Veröffentlichungstag und Bekanntmachung des Hinweises auf die Patenterteilung: **02.09.2026**
(21) Anmeldenummer: 23790268.9
(22) Anmeldetag: 13.10.2023
(51) Int. Cl.: B60T 13/74, F16D 65/18

(54) **BREMSEINHEIT ZUM ANORDNEN AN EINEM RAD EINES KRAFTFAHRZEUGS**
BRAKE UNIT FOR INSTALLATION ON A WHEEL OF A MOTOR VEHICLE
UNITÉ DE FREIN POUR INSTALLATION SUR UNE ROUE D'UN VEHICULE AUTOMOBILE

(30) Priorität: 22.12.2022 DE 102022214269
(43) Veröffentlichungstag der Anmeldung: 29.10.2025
(73) Patentinhaber: Robert Bosch GmbH, 70442 Stuttgart (DE)
(72) Erfinder: HAGSPIEL, Martin, 87549 Rettenberg (DE); WEH, Andreas, 87477 Sulzberg (DE)
(86) Internationale Anmeldenummer: PCT/EP2023/078474
(87) Internationale Veröffentlichungsnummer: WO 2024/132255

(56) Entgegenhaltungen:
- EP-A1- 3 275 741
- EP-A1- 3 805 590
- WO-A1-03/014588
- DE-A1- 10 236 686

## Beschreibung

### Stand der Technik

Die Erfindung betrifft eine Bremseinheit zum Anordnen an einem Rad eines Kraftfahrzeugs, mit einem axial bewegbaren Bremselement und einer das Bremselement wahlweise axial bewegenden Antriebsvorrichtung, bei der das Bremselement als ein axial verschiebbarer Bremskolben gestaltet ist, der mittels einer hydraulischen Übersetzung mit der Antriebsvorrichtung kraftübertragend gekoppelt ist. Ferner betrifft die Erfindung die Verwendung einer derartigen Bremseinheit an einem Rad eines Kraftfahrzeugs.

In Kraftfahrzeugen, wie Krafträdern, PKW oder LKW ist es bekannt, eine in der Regel in einem Motorraum des Kraftfahrzeugs angeordnete zentrale hydraulische Bremseinheit zu verwenden. Die zentrale Bremseinheit umfasst ein Hydraulikaggregat, das hydraulisch mit einem von einem Fahrer zu betätigenden Bremspedal verbunden ist. Beim Betätigen des Bremspedals wird ein herkömmlich in einem Hauptbremszylinder geführter Kolben verschoben, sodass ein mechanischer Druck des Bremspedals auf eine Hydraulik der Bremseinheit übertragen wird. Dort vorhandenes Bremsfluid wird mittels einer Volumenverschiebung durch eine Bremsleitung hydraulisch an eine Radbremse mindestens eines zugehörigen Rades weitergeleitet. An dem Rad wird damit ein Bremsdruck bereitgestellt.

Im Detail ist bei der Radbremse am Rad mindestens ein in einem Bremssattel angeordneter Kolben als axial bewegbares Bremselement vorgesehen. Der Kolben wird durch den Bremsdruck in Richtung eines radial bewegbaren Reibelements verschoben, das am Rad befestigt ist. Ein solches Reibelement ist eine Bremsscheibe oder Bremstrommel. Dabei drückt der Kolben gegen einen Bremsbelag, der gegen das Reibelement gepresst wird. Damit wird eine Reibkraft erzeugt, die die Drehbewegung des Reibelements und des daran gekoppelten Rades bremst. Bei einer Druckentlastung fährt der Kolben zurück in den Bremssattel. Der Bremsvorgang ist beendet.

In modernen Bremssystemen mit einer derart zentralen hydraulischen Bremseinheit dient das Bremspedal mit dem Hauptbremszylinder im Regelbetrieb oftmals nur zu einer Bremswunscherfassung des Fahrers. Dabei ist der Hauptbremszylinder von den Radbremsen entkoppelt. Ein Bremsdruck an den zugehörigen Radbremsen wird hingegen mittels eines Druckmittels aus einer elektrisch steuerbaren Druckaufbauvorrichtung erzeugt. Meist kann das Bremssystem in einer hydraulischen Rückfallebene mit Druckmittel aus dem Hauptbremszylinder betrieben werden. Ein derartiges Bremssystem ist aus DE 10 2014 222 759 A1 bekannt. Dabei wird ein Bremswunsch im Normalbremsfall mittels eines elektrischen Signals an die elektrisch steuerbare Druckaufbauvorrichtung weitergegeben. Das Bremspedal ist dabei nicht mehr direkt an die Bremseinheit angebunden.

Neuere Fahrzeugentwicklungen mit zunehmendem Automatisierungsgrad verzichten komplett auf das Bremspedal. Damit werden neue Anforderungen an das Bremssystem gestellt und Möglichkeiten für das Bremssystem geschaffen. So ist es bekannt, direkt am Rad eine elektromechanische Bremse als Bremseinheit vorzusehen, die in der Regel einen Elektromotor als Umwandler von elektrischer in mechanische Energie aufweist. Mittels der mechanischen Energie wird ein axial bewegbares Bremselement als Stempel gegen das radial bewegbare Reibelement gedrückt. Dabei ist eine hohe Übersetzung zwischen dem Umwandler und dem Bremselement notwendig, um eine erforderliche Bremskraft zu erreichen.

Ferner ist aus DE 102 36 686 A1 eine Bremszange zum Übergreifen einer mit einem Fahrzeugrad drehfest verbundenen Bremsscheibe mit einem Gehäuse und einen darin verschiebbar geführten ersten Kolben und verschiebbar geführten zweiten Kolben bekannt. Dabei ist der erste Kolben mittels einer Betriebsbremsanlage des Fahrzeugs verstellbar und wirkt der zweite Kolben auf einen zur Anlage an der Bremsscheibe bestimmten Bremsbelag.

Aus WO 03 / 014 588 A1 ist ein Bremssattel bekannt, der einen hydraulischen Betriebsbremsaktuator und einen elektrischen Feststellbremsaktuator umfasst. Dabei weist der Betriebsbremsaktuator einen Kolben auf, der in einem Zylinder verschiebbar geführt ist. In den Zylinder gelangt Hydraulikflüssigkeit durch eine geeignete hydraulische Verbindung.

Aus EP 3 275 741 A1 ist ein Bremssattel bekannt, der einen gegen eine Bremsscheibe drängenden Kolben aufweist, zu dem ein Fluid von einem Hauptzylinder durch einen Bremskreislauf zu verschieben ist.

Aus EP 3 805 590 A1 ist ein Bremssattel mit einem in einem Zylinderkörper verschiebbar gelagerten Kolben bekannt, der gegen einen Bremsbelag drängt und bei dem eine Bremsflüssigkeit in dem Zylinderkörper von der Umgebung isoliert ist. Dabei ist der Kolben mittels eines verschiebbar gelagerten weiteren Kolbens zu verschieben, der von einem elektrisch angetriebenen Aktuator anzutreiben ist.

Es ist eine Aufgabe der Erfindung, eine kraft- und bauraumoptimierte Bremseinheit insbesondere für neuere Fahrzeugentwicklungen zu schaffen, die ferner einen besonders sicheren und langlebigen Bremsbetrieb ermöglicht.

### Offenbarung der Erfindung

Die Erfindung ist definiert in dem unabhängigen Anspruch 1.

Das Radbremseinheit ist mit einem axial bewegbaren Bremselement und einer das Bremselement wahlweise axial bewegenden Antriebsvorrichtung vorgesehen.

Dabei ist das Bremselement als ein axial verschiebbarer Bremskolben gestaltet, der mittels einer hydraulischen Übersetzung mit der Antriebsvorrichtung bzw. einem Aktuator kraftübertragend gekoppelt ist. Insbesondere ist der Bremskolben in einem zugehörigen Kolbengehäuse bzw. Bremsgehäuse axial bzw. translatorisch verschiebbar geführt. Zudem ist in dem Bremsgehäuse bevorzugt ein Bremsfluid als Druckmittel aufzunehmen bzw. aufgenommen. Mittels einer Volumenverschiebung des Bremsfluids ist der Bremskolben axial verschiebbar im Bremsgehäuse geführt. Ein solcher Bremskolben ist im Vergleich zu einem axial bewegbaren Bremselement wie beispielsweise einem Stempel einer herkömmlichen elektromechanischen Bremseinheit mit wesentlich weniger Kraftaufwand bewegbar. Dabei müssen insbesondere wesentlich weniger Reibungskräfte beteiligter Bauteile überwunden werden.

Ferner ist mittels der hydraulischen Übersetzung ein Übersetzungsverhältnis zwischen der Antriebsvorrichtung und dem Bremskolben im Vergleich zu einer herkömmlich elektromechanischen Bremseinheit stark erhöht. Damit und in Kombination mit dem als Bremskolben gestalteten Bremselement sind erforderliche Lasten und wirkende Kräfte in der Bremseinheit sowie im gesamten Bremssystem wesentlich geringer. Es können einfachere und kostengünstigere Bauteile bei zugleich höherer Lebensdauer eingesetzt werden.

Bevorzugt weist der Bremskolben eine Stirnseite auf, die mittels der Antriebsvorrichtung aus dem Bremsgehäuse hinauszuführen ist. Beim Hinausfahren aus dem Bremsgehäuse übt der Bremskolben in axialer Richtung einen Pressdruck auf ein an dem Rad befestigtes Reibelement aus. Dabei ist an der derart außenliegenden Stirnseite bevorzugt ein Presselement, wie insbesondere eine Bremszange, angeordnet, an der besonders bevorzugt ein Bremsbelag angebracht ist, der gegen das Reibelement zu pressen ist. Lässt der Druck mittels der Antriebsvorrichtung auf den Bremskolben nach, so fährt der Bremskolben zurück in das Bremsgehäuse und der Bremskolben wird nicht mehr gegen das Reibelement gedrückt. Die Bremswirkung ist beendet. Dabei ist das Reibelement bautechnisch einfach bevorzugt eine Bremsscheibe oder sehr gut kraftübertragend bevorzugt eine Bremstrommel.

Zudem ist die Antriebsvorrichtung bevorzugt mit einer elektrischen Steuervorrichtung bzw. einem elektrischen Steuergerät signalübertragend gekoppelt. Die elektrische Steuervorrichtung ist dazu angepasst, einen Bremswunsch des Fahrers oder bei einem automatisierten Fahren einen Bremsbedarf eines zugehörigen Fahrzeugsteuersystems zu erfassen und entsprechend an die Antriebsvorrichtung weiterzugeben. Mittels der Antriebsvorrichtung ist der Bremskolben entsprechend des Bremswunsches in eine zugehörige Translationsbewegung zu versetzen.

Die erfindungsgemäße Bremseinheit ist eine in sich geschlossene hydraulische Einheit zum Anordnen direkt am Rad eines Kraftfahrzeugs. Diese geschlossene Radbrems-Bremseinheit mit hydraulischer Übersetzung ist damit eine einzelne, am Rad anzuordnende, dezentrale Bremseinheit, die insbesondere eine elektrohydraulische Bremse darstellt. Für ein besonders gleichmäßiges, gut steuerbares, anpassbares und redundantes Bremsen sind bevorzugt mindestens zwei solcher Bremseinheiten und ist besonders bevorzugt pro Rad eine solche dezentrale Bremseinheit angeordnet. Im Vergleich zu einer herkömmlichen zentralen hydraulischen Bremseinheit wird für keine der dezentralen Bremseinheiten ein Platz im Motorraum verbraucht. Zudem sind keine Bremsleitungen vom Motorraum zu den jeweiligen Radbremsen erforderlich. Damit sind Material und wertvoller Bauraum gespart.

Erfindungsgemäß vorteilhaft ist die hydraulische Übersetzung mittels eines zusätzlich zum Bremskolben vorgesehenen Antriebskolbens gestaltet, der in einem Antriebsgehäuse axial verschiebbar geführt ist, in dem Bremsfluid aufzunehmen bzw. aufgenommen ist. Dabei ist der Antriebskolben mittels des Bremsfluids hydraulisch verschiebbar, mit dem auch der Bremskolben hydraulisch verschiebbar ist. Der Bremskolben ist insbesondere mittels des Bremsfluids aus seinem Bremsgehäuse hinausbewegbar, während der Antriebskolben in sein Antriebsgehäuse hineinzubewegen ist. Eine solche hydraulische Übersetzung mittels zweier Kolben ist besonders kräftesparend. Insbesondere treten nur sehr geringe Reibungsverluste auf. Insgesamt sind damit erforderliche Lastanforderungen an beteiligte Bauteile weiter reduziert.

Ferner weist der Antriebskolben erfindungsgemäß vorteilhaft einen Antriebskolben-Durchmesser und der Bremskolben einen zum Antriebskolben-Durchmesser unterschiedlich gestalteten Bremskolben-Durchmesser auf. Damit kann eine hydraulische Übersetzung je nach Bedarf variiert und an jeweilige Erfordernisse bedarfsgerecht angepasst werden.

Bevorzugt ist dabei der Bremskolben-Durchmesser größer als der Antriebskolben-Durchmesser gestaltet. Damit ist die hydraulische Übersetzung dahingehend realisiert, dass mittels des größeren Bremskolben-Durchmessers bei annähernd gleichbleibendem Druck im Bremsfluid eine größere Kraft vom Bremskolben auf das Reibelement ausübbar ist, als vom Getriebe auf den Antriebskolben zu übertragen ist. Bei einem Bremsvorgang wird mittels der derartigen hydraulischen Übersetzung mit vergleichsweise wenig Kraft vom Antriebskolben eine vergleichsweise hohe Bremskraft vom Bremskolben an das Reibelement übertragen.

Erfindungsgemäß vorteilhaft ist der Antriebskolben mittels der Antriebsvorrichtung wahlweise in das Antriebsgehäuse hineinverschiebbar und aus dem Antriebsgehäuse hinausverschiebbar gestaltet. Damit ist der Antriebskolben je nach Bedarf mittels der Antriebsvorrichtung aktiv hin- und herverschiebbar. Zum Druckaufbau mittels des Bremskolbens ist der Antriebskolben aktiv in einer Antriebsrichtung in das Antriebsgehäuse hineinzuverschieben und damit der Bremskolben aus dem Bremsgehäuse hinauszuverschieben. Zum Druckabbau bzw. zur Druckentlastung ist der Antriebskolben aktiv mittels der Antriebsvorrichtung entgegen der Antriebsrichtung zurückzuziehen. Dabei wird mittels der hydraulischen Kopplung auch der Bremskolben zurückgezogen und der Bremsvorgang beendet. Bevorzugt ist dabei die Antriebsvorrichtung mit einem bautechnisch einfachen Spindeltrieb gestaltet, der mit dem Antriebskolben verbunden ist.

Alternativ oder zusätzlich ist der Antriebskolben erfindungsgemäß vorteilhaft mittels eines Federelements entgegen einer Antriebsrichtung bewegbar gestaltet. Dabei wirkt das Federelement nach einem Verschieben des Antriebskolbens in Antriebsrichtung in das Antriebsgehäuse hinein mit seiner Verformungskraft rückstellend auf den Antriebskolben. Nach Wegfall einer von der Antriebsvorrichtung in Antriebsrichtung wirkenden Kraft wird der Antriebskolben mittels des Federelements entgegen der Antriebsrichtung zurückverschoben. Mittels der hydraulischen Kopplung wird dabei auch der Bremskolben zurückgestellt. Das Federelement wirkt also als Rückstellfeder. Dabei ist das Federelement bevorzugt kostengünstig ein mechanisches Federelement, besonders bevorzugt ein metallisches Federelement, wie eine Schraubenfeder bzw. Druckfeder. Alternativ oder zusätzlich ist das Federelement bevorzugt mit einem Elastomer gestaltet. Ferner bevorzugt ist das Federelement bautechnisch einfach ein auf den Antriebskolben wirkendes einziges Rückstellelement. Besonders bevorzugt ist das Federelement zusätzlich zu einer den Antriebskolben rückstellenden Antriebsvorrichtung vorgesehen. Damit wird selbst bei einem Fehlerfall, wie einem Ausfall der Antriebsvorrichtung während des Bremsvorgangs, zum Beispiel wegen eines Stromausfalls, mit dem Federelement der Antriebskolben zurückgestellt und damit der Bremskolben zurückgezogen. Damit wird verhindert, dass Restdruck aufgrund von Reibung im System bestehen bleibt.

Zudem umfasst die Antriebsvorrichtung erfindungsgemäß vorteilhaft einen Antriebsmotor bzw. Motor und ein von dem Motor antreibbares Getriebe. Dabei ist der Motor bevorzugt von einem elektrischen Steuergerät zu steuern und besonders bevorzugt als ein Elektromotor ausgebildet. Dank der hydraulischen Übersetzung ist der Elektromotor insbesondere mit einem relativ geringen Drehmoment gestaltbar. Ein solcher Motor benötigt nur einen besonders geringen Bauraum und Materialeinsatz. Insbesondere können dabei wertvolle Rohstoffe wie Kupfer und Magnete gespart werden.

Bevorzugt ist das Getriebe mit einer rotatorisch-mechanischen Getriebeübersetzung gestaltet. Dabei ist ein Drehmoment einer Rotationsbewegung eines Motorelements, wie einer Motorwelle, zunächst mittels einer mechanischen Übersetzung in ein höheres Drehmoment einer Rotationsbewegung des Getriebes überführt. Damit ist zunächst das Drehmoment des Motors rotatorisch/rotatorisch übersetzt. Dazu umfasst das Getriebe einen Rotationsteil, der in unterschiedlichen Ausführungen gestaltet sein kann. Bevorzugt ist der Rotationsteil als Planetengetriebe, als Stirnradstufengetriebe oder als Schneckenradgetriebe gestaltet. Anschließend folgt eine rotatorisch/translatorische Übersetzung mittels eines zum Getriebe gehörenden Translationsteils, der bevorzugt als ein Kugelgewindetrieb oder besonders bevorzugt als ein Spindel-Mutter-Trieb gestaltet ist. Mittels einer damit erzeugten Translationsbewegung ist der mit dem Getriebe hydraulisch gekoppelte Bremskolben in eine Translationsbewegung zu versetzen. Dabei ist zwischen dem Bremskolben und dem Getriebe bevorzugt der Antriebskolben positioniert, der mittels des Getriebes in eine axiale Bewegung zu versetzen ist. Solche Getriebearten sind einfach und platzsparend in ihrer Bauweise, womit Bauraum und Materialien gespart sind. Es hat sich herausgestellt, dass mit einer solch einfachen mechanischen Übersetzung in der Antriebsvorrichtung in Kombination mit der hydraulischen Übersetzung zwischen der Antriebsvorrichtung und dem Bremskolben ein kraftsparender und zuverlässiger Aufbau von Bremsdruck gewährleistet ist.

Bevorzugt ist das Getriebe mit einem Kugelgewindetrieb gestaltet. Dabei ist eine Spindel mit einem Gewinde umgriffen, an dem mindestens eine Mutter vorgesehen ist, in der Kugeln in einem geschlossenen System umlaufen. Damit ist eine Rollreibung erreicht, mit der im Vergleich zu einer Gleitreibung bei einem Spindel-Mutter-Trieb bzw. Spindeltrieb Reibungsverluste verringert sind. Jedoch ist das Getriebe besonders bevorzugt mit dem kostengünstigeren Spindeltrieb bzw. Spindelantrieb gestaltet. Dabei ist eine vom Motor erzeugte Drehbewegung mittels einer Kupplung auf eine Spindel oder auf eine in ein Gewinde der Spindel eingreifende Mutter bzw. Spindelmutter zu übertragen, sodass mittels der Spindelmutter die Drehbewegung in eine lineare Bewegung zu übertragen ist. Damit ist ein bautechnisch sehr einfacher, kostengünstiger und präziser Antrieb geschaffen, der vergleichsweise wenig Einzelbauteile benötigt. Mit entsprechend wenig Einzelbauteilen ist entsprechend wenig Spiel im Getriebe vorhanden, was dessen Genauigkeit und Lebensdauer erhöht.

Die Druckausgleichsvorrichtung ist mit der Antriebsvorrichtung hydraulisch verbunden. Dazu ist bevorzugt eine Fluidleitung zwischen der Antriebsvorrichtung und der Druckausgleichsvorrichtung angeordnet. Insbesondere verbindet die Fluidleitung das Antriebsgehäuse mit einem Druckausgleichsbehälter. Sowohl im Antriebsgehäuse als auch im Druckausgleichsbehälter ist Bremsfluid aufzunehmen bzw. aufgenommen. Damit dient die Druckausgleichsvorrichtung zum ausgleichenden Bevorraten von Bremsfluid in einem insgesamt geschlossenen Hydrauliksystem der Bremseinheit. In dem geschlossenen Hydrauliksystem besteht andernfalls die Gefahr, dass mittels Erwärmung und einer damit verbundenen Druckerhöhung eine ungewollte Bremskraft entsteht. Mittels der Druckausgleichsvorrichtung ist im Falle einer solchen Erwärmung ein thermischer Volumenausgleich ermöglicht, was ein Auftreten einer solch ungewollten Bremskraft vermeidet. Bevorzugt ist die Fluidleitung in einem Bereich des Antriebsgehäuses angeordnet, in dem sich der Antriebskolben in Ruhestellung befindet. Dabei ist die Fluidleitung als eine sogenannte Schnüffelbohrung gestaltet. Eine je nach Position des Antriebskolbens herzustellende fluidleitende Verbindung oder Trennung der Druckausgleichsvorrichtung ist bevorzugt mittels einer speziellen Geometrie am Antriebskolben geschaffen. Besonders bevorzugt ist die spezielle Geometrie an einer in die Antriebsrichtung weisenden Stirnseite des Antriebskolbens bereitgestellt. Insbesondere weist der Antriebskolben dazu an seiner Stirnseite eine Nut auf, die in seiner Ruheposition im Bereich der Fluidleitung angeordnet ist. Damit ist eine Verbindung zwischen einem hydraulischen Bereich, insbesondere dem Antriebsgehäuse und der Druckausgleichsvorrichtung bereitgestellt. Ein Druckausgleich im Bremsfluid ist ermöglicht. Beim Hineinschieben des Antriebskolbens mit seiner Stirnseite in das Antriebsgehäuse wird die Fluidleitung bevorzugt dadurch verschlossen, dass der Antriebskolben dann vollumfänglich am Antriebsgehäuse anliegt. Alternativ liegt dazu der Antriebskolben bevorzugt nicht vollumfänglich am Antriebsgehäuse an und ist stattdessen mit einer den Antriebskolben radial umgreifenden Dichtungsanordnung versehen. Mit der derart verschlossenen Fluidleitung wird ein von der Druckausgleichsvorrichtung unbeeinflusster Bremsdruck in Richtung des Bremskolbens aufgebaut. Erfindungsgemäß bevorzugt ist die Druckausgleichsvorrichtung mit einer Druckausgleichsmembran gestaltet, die insbesondere im Druckausgleichsbehälter abdichtend angeordnet ist. Damit ist eine dichte Trennung zwischen einem atmosphärischen Luftdruck und dem im Antriebsgehäuse sich befindenden Bremsfluid geschaffen, die zugleich besonders flexibel auf Druckveränderungen reagiert.

Zum Abdichten des hydraulischen Bereichs von seiner Umgebung ist am Bremskolben bevorzugt eine den Bremskolben radial umgebende Dichtung vorgesehen, die insbesondere als Dichtring gestaltet ist. Besonders bevorzugt sind dabei axial nacheinander zwei solcher Dichtungen am Bremskolben angeordnet. Damit ist eine erhöhte Sicherheit gegen Leckage gewährleistet.

Erfindungsgemäß vorteilhaft ist ferner ein mit der Antriebsvorrichtung gekoppelter erster Sensor und ein zweiter Sensor vorgesehen. Bevorzugt ist der zweite Sensor mit dem Bremskolben gekoppelt. Besonders bevorzugt ist der zweite Sensor mit einer im Bremsgehäuse in Antriebsrichtung vor dem Bremskolben angeordneten Bremskammer gekoppelt. Alternativ bevorzugt ist der zweite Sensor mit einer zur Antriebsvorrichtung gehörigen Druckkammer im Antriebsgehäuse gekoppelt. Damit kann eine erforderliche Bremskraft mittels unterschiedlicher Methoden ermittelt werden. Bevorzugt sind die Sensoren als Druck- und/oder Kraftsensor gestaltet. Ferner ist eine Berechnung mittels eines Motorstroms oder einer Motorposition bevorzugt, die über einen Rotorlagesensor zu bestimmen ist. Insbesondere sind beide Sensoren signalübertragend mit einem Steuergerät gekoppelt, das je nach Signal die Antriebsvorrichtung und dort insbesondere den Motor ansteuert.

Besonders bevorzugt ist der erste Sensor als Rotorlagesensor und der zweite Sensor insbesondere als Drucksensor gestaltet. Damit ist eine Redundanz einer Bremskraftermittlung durch den Rotorlagesensor am Antriebsmotor und durch den Drucksensor in der hydraulischen Übersetzung geschaffen. Damit werden unterschiedliche Methoden für die Redundanz verwendet, womit besonders umfangreich unterschiedliche Ausfälle abgefangen werden können. Zudem ist von Vorteil, dass eine Messung per Drucksensor aufgrund der Hydraulik sehr einfach umzusetzen ist. Besonders bevorzugt ist der Motor mit einem Powerpack gestaltet, der eine Anbindung zu dem Drucksensor bildet.

Die Erfindung ist zudem auf eine Verwendung mindestens einer derartigen Bremseinheit jeweils an einem Rad bzw. als Bestandteil einer Radbremse eines Kraftfahrzeugs gerichtet. Bevorzugt wird dabei an mindestens zwei Rädern und besonders bevorzugt an jedem Rad des Kraftfahrzeugs eine solche Bremseinheit angeordnet und verwendet. Entsprechend ist die Erfindung auch auf ein Bremssystem eines Kraftfahrzeugs gerichtet, bei dem an mindestens einem Rad des Kraftfahrzeugs eine solche Bremseinheit angeordnet ist. Bevorzugt ist an jedem Rad des Kraftfahrzeugs die derartige Bremseinheit mit einem jeweils zugehörigen Steuergerät angeordnet. Zum Bremsen eines Rades oder mehrerer Räder des Kraftfahrzeugs wird ein elektrisches Signal an das Steuergerät der jeweiligen Bremseinheit gesendet. Das Steuergerät steuert den zugehörigen Motor an, der das Drehmoment auf die rotatorisch-mechanische Getriebeübersetzung überträgt, mit der der Bremskolben mittels der hydraulischen Übersetzung in eine translatorische Bewegung versetzt wird.

Damit ist bzw. wird erfindungsgemäß vorteilhaft mindestens eine dezentrale Bremseinheit verwendet, die insbesondere im Motorraum des Kraftfahrzeugs keinen Bauraum verbraucht. Für eine besonders gleichmäßige Bremswirkung sind mindestens zwei solcher dezentraler Bremseinheiten an jeweils einem Rad vorgesehen. Besonders bevorzugt ist an jedem Rad des Kraftfahrzeugs eine solche Bremseinheit angeordnet. Damit besteht im Vergleich zu einer herkömmlichen zentralen, im Motorraum untergebrachten, Bremseinheit kein Platzproblem im Motorraum. Zudem sind keine Bremsleitungen vom Motorraum zu den jeweiligen Radbremsen mehr erforderlich. Ferner ist für ein autonomes Fahren keine zweite Bremseinheit notwendig, da mit der erfindungsgemäßen Lösung insbesondere an jedem Rad bereits eine eigene Bremseinheit angeordnet ist. Eine erforderliche Redundanz ist bzw. wird bevorzugt mittels mindestens zweier erfindungsgemäßer Bremseinheiten bereitgestellt, die an zwei separaten Stromquellen angeschlossen sind.

Nachfolgend werden Ausführungsbeispiele der erfindungsgemäßen Lösung anhand der beigefügten schematischen Zeichnungen näher erläutert. Es zeigt:
- Fig. 1: einen Schaltplan einer Bremseinheit gemäß dem Stand der Technik,
- Fig. 2: den Schaltplan gemäß Fig. 1 eines ersten Ausführungsbeispiels einer erfindungsgemäßen Bremseinheit mit einer ersten Antriebskolbenvariante,
- Fig. 3: einen schematisierten Längsschnitt des ersten Ausführungsbeispiels mit einer zweiten Antriebskolbenvariante,
- Fig. 4: den Schaltplan gemäß Fig. 1 eines zweiten Ausführungsbeispiels einer erfindungsgemäßen Bremseinheit mit der ersten Antriebskolbenvariante,
- Fig. 5: die Ansicht gemäß Fig. 3 des zweiten Ausführungsbeispiels mit der zweiten Antriebskolbenvariante,
- Fig. 6: das Detail VI gemäß Fig. 2 in verschiedenen Positionen eines Antriebskolbens eines dritten Ausführungsbeispiels einer erfindungsgemäßen Bremseinheit und
- Fig. 7: das Detail VII gemäß Fig. 6.

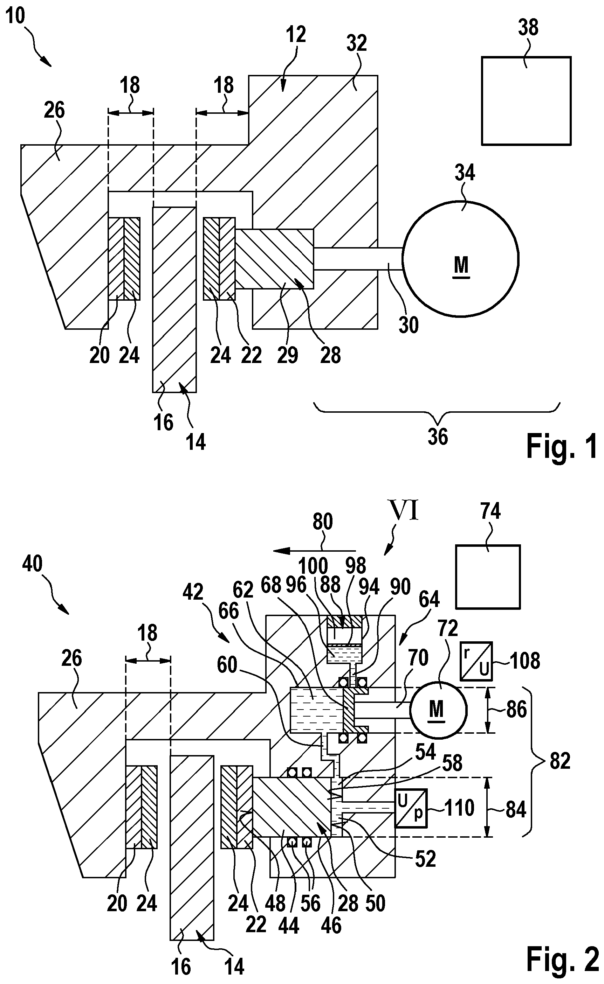

In Fig. 1 ist eine als Scheibenbremse ausgebildete elektromechanische Bremse 10 mit einem vereinfachten Schaltplan dargestellt. Dabei umfasst die Bremse 10 eine Bremseinheit 12, die an einem nicht dargestellten Rad eines Kraftfahrzeugs angeordnet ist. An dem Rad ist ein zur Bremse 10 gehöriges, radseitiges und im Betrieb rotierendes Bremselement 14 bzw. Reibelement befestigt, das als Bremsscheibe 16 gestaltet ist. Die Befestigung ist nicht gezeigt. Nur die Bremsscheibe 16 ist teilweise dargestellt. In einem am Fahrzeug montierten Zustand des Rades und der Bremseinheit 12 ist oben am radialen Umfang der Bremsscheibe 16 die Bremseinheit 12 angeordnet und umgibt die Bremsscheibe 16 mit einem dazwischenliegenden Abstand 18.

In dem Abstand 18 ist beidseits zur Bremsscheibe 16 je eine Bremsbacke bzw. Bremszange 20, 22 angeordnet, an der bremsscheibenseitig sich jeweils ein Bremsbelag 24 befindet. Dabei ist die eine Bremszange 20 an einem Trägerelement bzw. Bremssattel 26 montiert, während die andere Bremszange 22 an einem axial bewegbaren Bremselement 28 befestigt ist. Das axial bewegbare Bremselement 28 ist vorliegend als Druckstempel 29 gestaltet, der mittels eines Getriebes 30 translatorisch in einem mit dem Bremssattel 26 vereinigten Gehäuse 32 hin- und herzubewegen ist. Dabei ist das Getriebe 30 als eine nicht genauer dargestellte Gewindetriebanordnung gestaltet, die mittels eines Antriebsmotors bzw. Motors 34 antreibbar ist. Der Motor 34 und das Getriebe 30 bilden eine Antriebsvorrichtung 36, bei der der Motor 34 signalübertragend mit einer elektrischen Steuervorrichtung 38 gekoppelt ist. Je nach Signal wird der Motor 34 entsprechend gesteuert, was zu einer Drehbewegung des Motors 34 führt. Dabei ist der Motor 34 mit dem Getriebe 30 derart gekoppelt, dass die Drehbewegung des Motors 34 in eine translatorische Bewegung des Druckstempels 29 überführt ist. Bei einer Steuerung dahingehend, dass der Druckstempel 29 mittels des Getriebes 30 aus dem Gehäuse 32 herausgefahren wird, werden die Bremszangen 20, 22 und damit die Bremsbeläge 24 gegen die Bremsscheibe 16 gedrückt. Dabei bildet jede Bremszange 20, 22 mit ihrem Bremsbelag 24 mit der Bremsscheibe 16 als rotierendes Reibelement jeweils ein Reibpaar, das eine Drehbewegung des Rades abbremst. Bei einem Zurückfahren des Druckstempels 29 werden die Bremsbeläge 24 von der Bremsscheibe 16 gelöst und die Bremsung beendet.

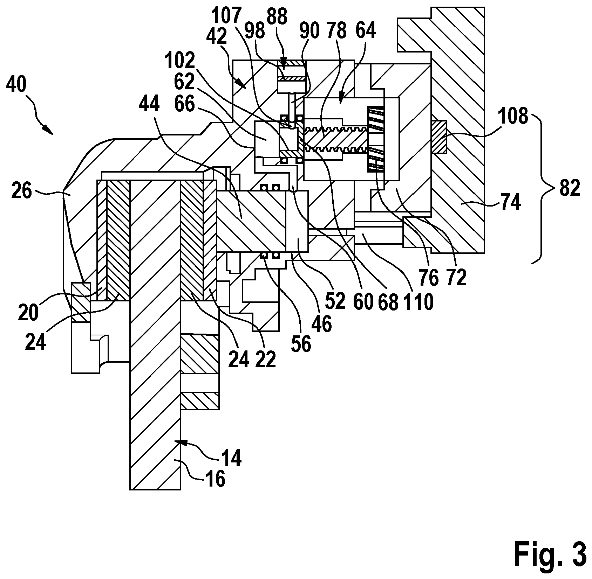

In Fig. 2 und Fig. 3 ist im Gegensatz zu einer solchen elektromechanischen Bremse 10 eine elektrohydraulische Bremse 40 dargestellt. Die Bremse 40 umfasst eine Bremseinheit 42, die einen Bremskolben 44 als axial bewegbares Bremselement 28 aufweist. Dabei ist der Bremskolben 44 translatorisch verschiebbar in einem in dem Bremssattel 26 angeordneten Bremsgehäuse 46 geführt. Axial außerhalb des Bremsgehäuses 46 befindet sich eine Stirnseite 48 des Bremskolbens 44, die mit der Bremszange 22 und dem daran anliegenden Bremsbelag 24 kraftübertragend gekoppelt ist.

Der Stirnseite 48 axial gegenüberliegend befindet sich am Bremskolben 44 eine Stirnseite 50, die mit dem Bremsgehäuse 46 eine in ihrem Volumen variable Bremskammer 52 einschließt, in der ein Bremsfluid 54 aufgenommen ist. Zum Abdichten der Bremskammer 52 von ihrer Umgebung außerhalb des Bremsgehäuses 46 bzw. des Bremssattels 26 sind zwei axial nacheinander angeordnete Dichtungen 56 vorgesehen, die als Dichtringe gestaltet sind und den Bremskolben 44 jeweils radial umgreifen. Die Bremskammer 52 ist axial zwischen der Stirnseite 50 und einer das Bremsgehäuse 46 begrenzenden Wand 58 mittels einer Fluidleitung 60 mit einer mit Bremsfluid 54 gefüllten Druckkammer 62 hydraulisch verbunden. Die Druckkammer 62 gehört zu einer Antriebsvorrichtung 64, die zudem ein die Druckkammer 62 umfassendes Antriebsgehäuse 66 und einen in dem Antriebsgehäuse 66 axial verschiebbar geführten Antriebskolben 68 aufweist.

Der Antriebskolben 68 ist mit einem zur Antriebsvorrichtung 64 gehörenden Getriebe 70 axial hin- und herverschiebbar geführt. Dabei ist das Getriebe 70 mit einem Antriebsmotor 72 bzw. Motor 72 kraftübertragend gekoppelt, der wiederum signalübertragend mit einer Steuervorrichtung 74 gekoppelt ist. Je nach Signal ist der als Elektromotor gestaltete Motor 72 hinsichtlich seiner Drehbewegung gesteuert. Bei einer Rotation in eine Richtung wird ein zum Getriebe 70 gehörendes und an den Motor 72 gekoppeltes Planetengetriebe 76 in eine entsprechende Rotation versetzt. Mit dem Planetengetriebe 76 ist ein zum Getriebe 70 gehörender Spindeltrieb 78 gekoppelt, mit dem die Rotation in eine Axialbewegung des an den Spindeltrieb 78 gekoppelten Antriebskolbens 68 zu überführen ist. Dabei wird bei einem Hineinführen des Antriebskolbens 68 in einer Antriebsrichtung 80 in das Antriebsgehäuse 66 das in der Druckkammer 62 sich befindende Bremsfluid 54 durch die Fluidleitung 60 aus der Druckkammer 62 hinaus und in die Bremskammer 52 hineingedrängt. Mittels einer solchen Volumenverschiebung des Bremsfluids 54 wird der Bremskolben 44 mit seiner Stirnseite 48 aus dem Bremsgehäuse 46 hinausverschoben. Damit wird die an der Stirnseite 48 angeordnete Bremszange 22 mit ihrem Bremsbelag 24 gegen das radseitige, als Bremsscheibe 16 gestaltete, rotierende Bremselement 14 gedrückt. Eine Rotation der Bremsscheibe 16 und des zugehörigen Rades wird gebremst.

Wird der Motor 72 bei einem entsprechenden Signal zu einer entgegengesetzten Rotation angetrieben, so wird das Planetengetriebe 76 in eine entsprechende Rotation versetzt. Damit wird mittels des Spindeltriebs 78 die entgegengesetzte Rotation in eine entgegensetzte Translationsbewegung des Antriebskolbens 68 überführt. Dabei wird der Antriebskolben 68 entgegen der Antriebsrichtung 80 aus dem Antriebsgehäuse 66 hinausgeführt und damit mittels der Antriebsvorrichtung 64 aktiv zurückgestellt. Beim Zurückstellen wird mittels des Hinausbewegens des Antriebskolbens 68 ein Sog in der Druckkammer 62 erzeugt, mit dem Bremsfluid 54 aus der Bremskammer 52 durch die Fluidleitung 60 in die Druckkammer 62 zurückgezogen und verschoben wird. Dabei wird entsprechend in der Bremskammer 52 ein Sog erzeugt, mit dem der Bremskolben 44 entgegen der Antriebsrichtung 80 in das Bremsgehäuse 46 hineinverschoben wird. Entsprechend wird die am Bremskolben 44 angeordnete Bremszange 22 mit ihrem Bremsbelag 24 von der Bremsscheibe 16 zurückgezogen. Die Bremswirkung wird dabei gelöst.

Damit ist insbesondere mittels des Bremsfluids 54, des im Antriebsgehäuse 66 axial verschiebbar geführten Antriebskolbens 68, des im Bremsgehäuse 46 axial verschiebbar geführten Bremskolbens 44 und der die beiden Gehäuse 46, 66 verbindenden Fluidleitung 60 eine hydraulische Übersetzung 82 geschaffen. Zur hydraulischen Übersetzung 82 weist der Bremskolben 44 zudem einen Bremskolben-Durchmesser 84 auf, der größer ist als ein Antriebskolben-Durchmesser 86 des Antriebskolbens 68. Entsprechendes gilt für die Querschnitts-Durchmesser des zugehörigen Bremsgehäuses 46 und Antriebsgehäuses 66. Damit ist die hydraulische Übersetzung 82 realisiert, mit der bei einem Bremsvorgang mit relativ wenig Kraft vom Antriebskolben 68 eine relativ hohe Bremskraft vom Bremskolben 44 an die Bremsscheibe 16 übertragen wird.

Dabei ist die Bremseinheit 42 als geschlossenes hydraulisches System gestaltet, in dem ein thermischer Volumenausgleich mittels einer Druckausgleichsvorrichtung 88 ermöglicht ist, die durch eine Fluidleitung 90 an das Antriebsgehäuse 66 angeschlossen ist. Dabei führt die Fluidleitung 90 aus einem Bereich 92 des Antriebsgehäuses 66, in dem sich der Antriebskolben 68 in Ruhestellung befindet, heraus und in einen Druckausgleichsbehälter 94 hinein. Im Antriebsgehäuse 66 und in einem an die Fluidleitung 90 angrenzenden Raum 96 im Druckausgleichsbehälter 94 ist Bremsfluid 54 aufgenommen. Den Raum 96 begrenzend ist eine Druckausgleichsmembran 98 im Druckausgleichsbehälter 94 befestigt, die den mit Bremsfluid 54 gefüllten Raum 96 gegenüber einem mit Luftdruck gefüllten Raum 100 abdichtend trennt.

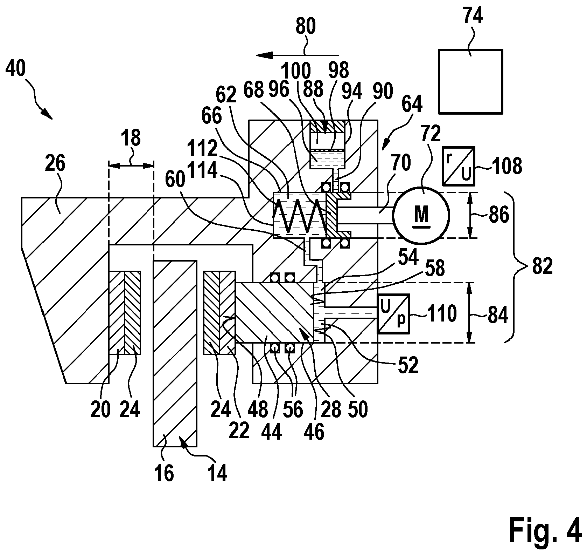

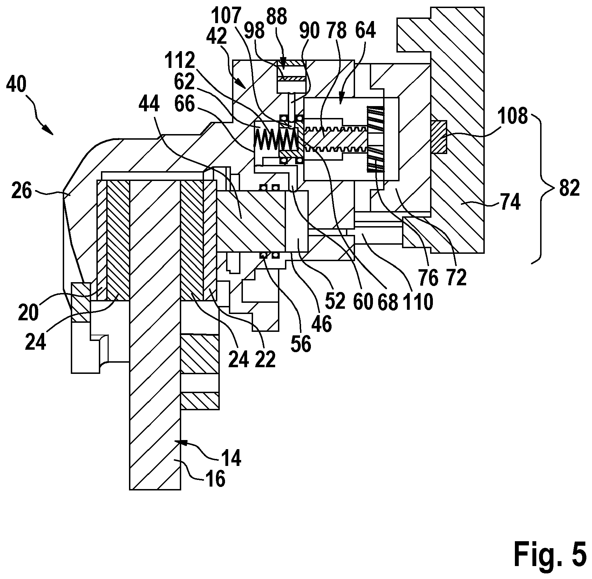

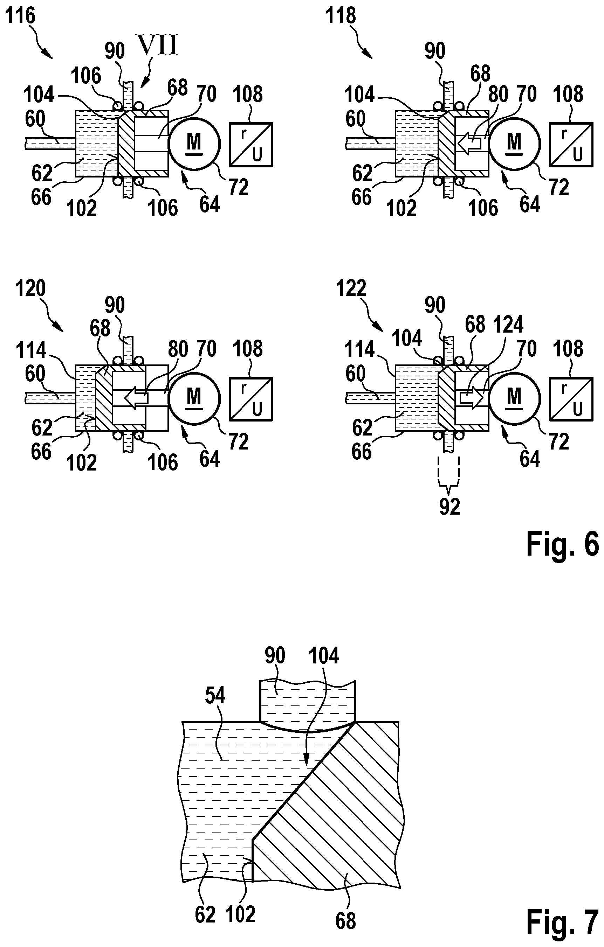

Die Fluidleitung 90 ist in Abhängigkeit von einer Position des Antriebskolbens 68 verschlossen oder mit dem Antriebsgehäuse 66 fluidleitend verbunden. Dazu weist der Antriebskolben 68 ein spezielles Design auf. Eine erste Variante ist in Fig. 2 (und Fig. 4) und eine zweite Variante in Fig. 3 (und Fig. 5) dargestellt. Gemäß der ersten Variante in Fig. 2 (und Fig. 4) sowie detailliert in Fig. 6 und Fig. 7 hat der Antriebskolben 68 an seiner in die Antriebsrichtung 80 weisenden Stirnseite 102 eine abgeschrägte Nut 104, die in Ruheposition des Antriebskolbens 68 im Bereich 92 der Fluidleitung 90 angeordnet ist. Damit ist eine Verbindung zwischen dem Antriebsgehäuse 66 und der Druckausgleichsvorrichtung 88 geschaffen. Beim Hineinschieben des Antriebskolbens 68 mit seiner Stirnseite 102 und der dort angeordneten Nut 104 in das Antriebsgehäuse 66 wird die Fluidleitung 90 dadurch verschlossen, dass der Antriebskolben 68 vollumfänglich am Innenmantel des Antriebsgehäuses 66 anliegt. Zusätzlich abdichtend liegt axial beidseitig zur Fluidleitung 90 radial um den Antriebskolben 68 jeweils eine Dichtung 106 an. In einer nicht dargestellten Ausführungsvariante liegt dabei der Antriebskolben 68 nicht zwingend am Antriebsgehäuse 66 an, sondern nur an der Dichtung 106.

Gemäß der zweiten Variante in Fig. 3 (und Fig. 5) weist der Antriebskolben 68 eine Durchgangsöffnung 107 auf, die in eine in Antriebsrichtung 80 offene, becherförmig gestaltete Stirnseite 102 des Antriebskolbens 68 führt. In Ruhestellung befindet sich die Durchgangsöffnung 107 an der Fluidleitung 90.

Zum Steuern ist ein mit dem Motor 72 der Antriebsvorrichtung 64 gekoppelter erster Sensor 108 vorgesehen, der als Rotorlagesensor gestaltet ist. Damit erfasst der Sensor 108 die Rotorlage des Motors 72. In Redundanz dazu ist ferner ein zweiter Sensor 110 vorgesehen, der als Drucksensor den Druck des Bremsfluids 54 in der Bremskammer 52 des Bremsgehäuse 46 erfasst. Beide Sensoren 108, 110 sind mit der Steuervorrichtung 74 signalübertragend gekoppelt. Je nach Signal ist mit der Steuervorrichtung 74 der Motor 72 und damit die Antriebsvorrichtung 64 zu steuern.

In Fig. 4 und Fig. 5 ist die elektrohydraulische Bremse 40 in einem Ausführungsbeispiel dargestellt, bei dem im Vergleich zum in Fig. 2 und 3 dargestellten Ausführungsbeispiel ein Federelement 112 in der Druckkammer 62 angeordnet ist. Das Federelement 112 ist als Rückstellfeder gestaltet, die vorliegend als metallische Schraubenfeder ausgebildet ist. Zudem ist das Federelement 112 axial zwischen der Stirnseite 102 des Antriebskolbens 68 und einer axial gegenüberliegenden Wand 114 des Antriebsgehäuses 66 angeordnet. Das Federelement 112 verformt sich beim Hineinfahren des Antriebskolbens 68 in das Antriebsgehäuse 66 und wirkt bei Wegfall einer mittels des Motors 72 erzeugten Antriebskraft entgegen der Antriebsrichtung 80 rückstellend auf den Antriebskolben 68.

In vorliegendem Ausführungsbeispiel wirkt dabei das Federelement 112 zusätzlich zu dem den Antriebskolben 68 mittels des Motors 72 rückstellenden Getriebes 70. Damit ist auch bei einem Fehlerfall, wie einem Stromausfall, bei dem der Motor 72 nicht angetrieben werden kann, mit dem zusätzlich rückstellend wirkenden Federelement 112 der Antriebskolben 68 und mittels der hydraulischen Übersetzung 82 auch der Bremskolben 44 zurückgestellt.

In einer weiteren, hier nicht dargestellten, vorteilhaften Ausführungsform ist der Antriebskolben 68 allein mittels des Federelements 112 als einziges Rückstellelement rückstellbar gestaltet.

In Fig. 6 sind verschiedene Positionen des Antriebskolbens 68 im Antriebsgehäuse 66 dargestellt. Dabei zeigt eine erste Position 116 eine Ruhestellung des Antriebskolbens 68, was in Fig. 7 mit einem Ausschnitt im Detail dargestellt ist. Dabei ist die an der Stirnseite 102 vorgesehene abgeschrägte Nut 104 gezeigt, mit der eine fluidleitende Verbindung zwischen der Fluidleitung 90 und der Druckkammer 62 im Antriebsgehäuse 66 geschaffen ist. Eine zweite Position 118 des Antriebskolbens 68 zeigt, wie der Antriebskolben 68 zum beginnenden Druckaufbau in Antriebsrichtung 80 in das Antriebsgehäuse 66 hineingeschoben wird. In einer dritten Position 120 ist der Antriebskolben 68 in seiner Druckaufbauposition, während in einer vierten Position 122 der Antriebskolben 68 zum Druckabbau wieder aus dem Antriebsgehäuse 66 in einer der Antriebsrichtung 80 entgegengesetzten Richtung 124 herausverschoben worden ist.

## Patentansprüche

1. Bremseinheit (42) zum Anordnen an einem Rad eines Kraftfahrzeugs mit einem axial bewegbaren Bremselement (28) und einer das Bremselement (28) wahlweise axial bewegenden Antriebsvorrichtung (64), bei der das Bremselement (28) als ein axial verschiebbarer Bremskolben (44) gestaltet ist, der mittels einer hydraulischen Übersetzung (82) mit der Antriebsvorrichtung (64) kraftübertragend gekoppelt ist,
wobei die Bremseinheit (42) eine in sich geschlossene hydraulische Einheit ist, die einzeln an dem Rad anzuordnen ist,
**dadurch gekennzeichnet, dass** eine Druckausgleichsvorrichtung (88) vorgesehen ist, die mit der Antriebsvorrichtung (64) hydraulisch verbunden ist.

2. Bremseinheit nach Anspruch 1,
**dadurch gekennzeichnet, dass** die hydraulische Übersetzung (82) mittels eines zusätzlich zum Bremskolben (44) vorgesehenen Antriebskolbens (68) gestaltet ist, der in einem Antriebsgehäuse (66) axial verschiebbar geführt ist.

3. Bremseinheit nach Anspruch 2,
**dadurch gekennzeichnet, dass** der Antriebskolben (68) einen Antriebskolben-Durchmesser (86) und der Bremskolben (44) einen zum Antriebskolben-Durchmesser (86) unterschiedlich gestalteten Bremskolben-Durchmesser (84) aufweist, wobei insbesondere der Bremskolben-Durchmesser (84) größer als der Antriebskolben-Durchmesser (86) gestaltet ist.

4. Bremseinheit nach Anspruch 2 oder 3,
**dadurch gekennzeichnet, dass** der Antriebskolben (68) mittels der Antriebsvorrichtung (64) wahlweise in das Antriebsgehäuse (66) hineinverschiebbar und aus dem Antriebsgehäuse (66) hinausverschiebbar gestaltet ist.

5. Bremseinheit nach einem der Ansprüche 2 bis 4,
**dadurch gekennzeichnet, dass** der Antriebskolben (68) mittels eines Federelements (112) entgegen einer Antriebsrichtung (80) verschiebbar gestaltet ist.

6. Bremseinheit nach einem der Ansprüche 1 bis 5,
**dadurch gekennzeichnet, dass** die Antriebsvorrichtung (64) einen Antriebsmotor (72) und ein von dem Antriebsmotor (72) antreibbares Getriebe (70) umfasst.

7. Bremseinheit nach einem der Ansprüche 1 bis 6,
**dadurch gekennzeichnet, dass** die Druckausgleichsvorrichtung (88) mit einer Druckausgleichsmembran (98) gestaltet ist.

8. Bremseinheit nach einem der Ansprüche 1 bis 7,
**dadurch gekennzeichnet, dass** ein mit der Antriebsvorrichtung (64) gekoppelter erster Sensor (108) und ein zweiter Sensor (110) vorgesehen ist.

9. Verwendung mindestens einer Bremseinheit (42) nach einem der Ansprüche 1 bis 8 jeweils an einem Rad eines Kraftfahrzeugs.

## Claims

1. Brake unit (42) for arranging on a wheel of a motor vehicle with an axially movable brake element (28) and a drive device (64) selectively axially moving the brake element (28), in which brake unit the brake element (28) is designed as an axially displaceable brake piston (44), which is coupled to the drive device (64) in a power-transmitting manner by means of a hydraulic transmission means (82),
wherein the brake unit (42) is a self-contained hydraulic unit which is to be arranged individually on the wheel,
**characterized in that** a pressure equalization device (88) is provided, which is hydraulically connected to the drive device (64).

2. Brake unit according to Claim 1,
**characterized in that** the hydraulic transmission means (82) is designed by means of a drive piston (68) which is provided in addition to the brake piston (44) and is guided axially displaceably in a drive housing (66).

3. Brake unit according to Claim 2,
**characterized in that** the drive piston (68) has a drive piston diameter (86), and the brake piston (44) has a brake piston diameter (84) of different design from the drive piston diameter (86), wherein, in particular, the brake piston diameter (84) is of larger design than the drive piston diameter (86).

4. Brake unit according to Claim 2 or 3,
**characterized in that** the drive piston (68) is designed, by means of the drive device (64), selectively to be displaceable into the drive housing (66) and to be displaceable out of the drive housing (66).

5. Brake unit according to one of Claims 2 to 4,
**characterized in that** the drive piston (68) is designed to be displaceable by means of a spring element (112) counter to a drive direction (80).

6. Brake unit according to one of Claims 1 to 5,
**characterized in that** the drive device (64) comprises a drive motor (72) and a gearbox (70) which can be driven by the drive motor (72).

7. Brake unit according to one of Claims 1 to 6,
**characterized in that** the pressure equalization device (88) is designed with a pressure equalization diaphragm (98).

8. Brake unit according to one of Claims 1 to 7,
**characterized in that** a first sensor (108), coupled to the drive device (64), and a second sensor (110) are provided.

9. Use of at least one brake unit (42) according to one of Claims 1 to 8 in each case on a wheel of a motor vehicle.

## Revendications

1. Unité de freinage (42) destinée à être disposée sur une roue d'un véhicule à moteur, avec un élément de freinage (28) pouvant être déplacé axialement et un dispositif d'entraînement (64) déplaçant au choix axialement l'élément de freinage (28), dans laquelle l'élément de freinage (28) est configuré comme un piston de freinage (44) pouvant être coulissé axialement, qui est couplé de manière à transmettre des forces au dispositif d'entraînement (64) au moyen d'un multiplicateur hydraulique (82),
l'unité de freinage (42) étant une unité hydraulique fermée sur elle-même, qui doit être disposée individuellement sur la roue,
**caractérisée en ce qu'**il est prévu un dispositif d'équilibrage de pression (88), qui est relié hydrauliquement au dispositif d'entraînement (64).

2. Unité de freinage selon la revendication 1,
**caractérisée en ce que** le multiplicateur hydraulique (82) est configuré au moyen d'un piston d'entraînement (68) prévu en plus du piston de freinage (44), qui est guidé de manière à pouvoir coulisser axialement dans un boîtier d'entraînement (66).

3. Unité de freinage selon la revendication 2,
**caractérisée en ce que** le piston d'entraînement (68) présente un diamètre de piston d'entraînement (86) et le piston de freinage (44) présente un diamètre de piston de freinage (84) différent du diamètre de piston d'entraînement (86), le diamètre de piston de freinage (84) étant en particulier plus grand que le diamètre de piston d'entraînement (86).

4. Unité de freinage selon la revendication 2 ou 3,
**caractérisée en ce que** le piston d'entraînement (68) est configuré de manière à pouvoir être coulissé au choix à l'intérieur du boîtier d'entraînement (66) et hors du boîtier d'entraînement (66) au moyen du dispositif d'entraînement (64).

5. Unité de freinage selon l'une des revendications 2 à 4,
**caractérisée en ce que** le piston d'entraînement (68) est configuré de manière à pouvoir être coulissé dans le sens inverse d'une direction d'entraînement (80) au moyen d'un élément à ressort (112).

6. Unité de freinage selon l'une des revendications 1 à 5,
**caractérisée en ce que** le dispositif d'entraînement (64) comprend un moteur d'entraînement (72) et une transmission (70) pouvant être entraînée par le moteur d'entraînement (72).

7. Unité de freinage selon l'une des revendications 1 à 6,
**caractérisée en ce que** le dispositif d'équilibrage de pression (88) est configuré avec une membrane d'équilibrage de pression (98).

8. Unité de freinage selon l'une des revendications 1 à 7,
**caractérisée en ce qu'**un premier capteur (108) couplé au dispositif d'entraînement (64) et un deuxième capteur (110) sont prévus.

9. Utilisation d'au moins une unité de freinage (42) selon l'une des revendications 1 à 8, respectivement sur une roue d'un véhicule à moteur.
